# EUROPEAN PATENT APPLICATION

(11) **EP 4 618 239 A1**
(43) Date of publication of application: **17.09.2025**
(21) Application number: 24194881.9
(22) Date of filing: 16.08.2024
(51) Int. Cl.: H01M 10/613, H01M 10/6552, H01M 10/6555, H01M 10/6556, H01M 50/209, H01M 50/375, H01M 50/383, A62C 3/16

(54) **ENERGY STORAGE MODULE**

(30) Priority: 14.03.2024 KR 20240035709
(71) Applicant: SAMSUNG SDI CO., LTD., Giheung-gu Yongin-si, Gyeonggi-do 17084 (KR)
(72) Inventor: Hwang, Tae Sin, 17084 Yongin-si, Gyeonggi-do (KR); Kim, Woo Choul, 17084 Yongin-si, Gyeonggi-do, (KR)
(74) Representative: Gulde & Partner

(57) **Abstract**

An energy storage module includes: a coolant tank for storing coolant; a fire extinguishing agent tank for storing a fire extinguishing agent; a pipe connected to the coolant tank and fire extinguishing agent tank; a plurality of cooling plates connected to the pipe; and a plurality of battery modules respectively coupled to the cooling plates. Each of the battery modules includes a battery cell, and the battery cell has a vent in one surface thereof and another surface in contact with the corresponding one of the cooling plates.

## Description

### BACKGROUND

### 1. Field

Aspects of embodiments relate to an energy storage module.

### 2. Description of the Related Art

A secondary battery is a power storage system capable of storing electrical energy as chemical energy. The secondary battery is a battery that is designed to be charged and discharged, different from a primary battery, which is not designed to be charged. The secondary battery is used in IT devices, such as smartphones, cellular phones, laptops, and tablet PCs. In recent years, there has been a growing interest in electric vehicles as a way to reduce environmental pollution. Accordingly, the secondary battery is also used in electric vehicles, and in such applications, the secondary batteries should exhibit certain characteristics, such as high density, high power, and stability.

The information disclosed in this section is provided only for enhancement of understanding of the background of the disclosure and therefore it may contain information that does not form the prior art.

### SUMMARY

The invention is defined by the appended claims.

Embodiments of the present disclosure provide an energy storage module that cools the battery cells during normal operation and sprays a fire extinguishing agent when an event occurs in a battery cell.

An energy storage module, according to an embodiment of the present disclosure, includes: a coolant tank for storing coolant; a fire extinguishing agent tank for storing a fire extinguishing agent; a pipe connected to the coolant tank and fire extinguishing agent tank; a plurality of cooling plates connected to the pipe; and a plurality of battery modules respectively coupled to the cooling plates. Each of the battery modules includes a battery cell, and the battery cell has a vent in one surface thereof and another surface in contact with the corresponding one of the cooling plates.

The fire extinguishing agent tank may be coupled to the pipe through a valve.

The fire extinguishing agent tank may be configured to store a fire extinguishing agent, nitrogen, or a mixture thereof.

The battery modules may be stacked in a vertical direction, and one of the cooling plates contacting an upper one of the battery modules may be at an upper part of a lower one of the battery modules.

The battery modules may each include a side wall cover, a lower cover, and an upper cover. The battery cell may be accommodated in a space formed by the side wall cover and the upper cover, and the upper cover may be on the one surface of the battery cell at where the vent is formed.

The lower cover may contact the corresponding cooling plate.

The upper cover may include a cover plate, the cover plate may have a hollow, and the hollow may be in a region corresponding to the vent of a corresponding one of the battery cells.

The upper cover may include a guide frame, the guide frame may be between the battery cell and the cover plate, and the guide frame may contact the battery cell.

The guide frame may have an opening, the opening may be in a region corresponding to the vent, and the guide frame may protrude upwardly from an edge of the opening to contact the cover plate.

Each of the cooling plates may include a coolant pipe through which the coolant moves and a cover member surrounding the coolant pipe. The coolant pipe may have a melting area at a position corresponding to the battery cell of a lower one of the battery modules.

The melting area may be at a position corresponding to the vent of the battery cell of the lower one of the battery modules.

The cover member may have a hole exposing the melting area, and the melting area may protrude downwardly into the hole.

When the melting area is opened, the coolant from the coolant pipe or the fire extinguishing agent from the fire extinguishing agent tank may be sprayed into a lower battery cell.

The battery modules may include a first battery module and a second battery module on the first battery module, and the cooling plates may include a first cooling plate and a second cooling plate. The first cooling plate may be in contact with the battery cell of the first battery module, and the second cooling plate may be in contact with the battery cell of the second battery module.

The first battery module may be cooled by the first cooling plate, and the second battery module may be cooled by the second cooling plate.

The first cooling plate may include a coolant pipe through which the coolant moves and a cover member surrounding the coolant pipe. The coolant pipe may have a melting area, and the melting area may be at a position corresponding to the battery cell of the second battery module.

When an event occurs in the battery cell of the second battery module, the coolant or the fire extinguishing agent may be sprayed into the battery cell of the second battery module through the melting area of the first cooling plate.

The vent of the first battery module may be in a region corresponding to the melting area of the first cooling plate.

The first battery module may include a side wall cover, a lower cover, and an upper cover. The battery cell of the first battery module may be accommodated in a space formed by the side wall cover and the upper cover, and the upper cover may be on the one surface of the battery cell at where the vent is formed. The upper cover may include a cover plate, the cover plate may have a hollow, and the hollow may be in a region corresponding to the vent and the melting area.

The upper cover may include a guide frame, the guide frame may have an opening, and the opening may be in a region corresponding to the vent, the hollow, and the melting area.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of exemplary embodiments that follows, and the disclosure is not to be construed as limited to what is shown in such drawings. In the drawings:
FIG. 1 is an energy storage module according to an embodiment.
FIG. 2 is an enlarged view of a cooling plate of an upper battery module and an upper cover of a lower battery module.
FIG. 3 is a view showing an event occurring in a battery cell of the lower battery module.
FIG. 4 is a view showing a fire extinguishing agent being injected into a battery cell in which the event occurs.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects, and features of the present disclosure. Accordingly, it should be understood that there may be various modifications that can replace or modify the embodiments described herein at the time of filing this application.

The embodiments of the present disclosure are combinable. For example, a feature that is described with respect to only one embodiment may also be provided for another embodiment. Further, an embodiment may also include less features, or other features, than described. That is, not all the features of an embodiment need necessarily be present.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Hereinafter, an energy storage module according to an embodiment of the present disclosure will be described with reference to the drawings.

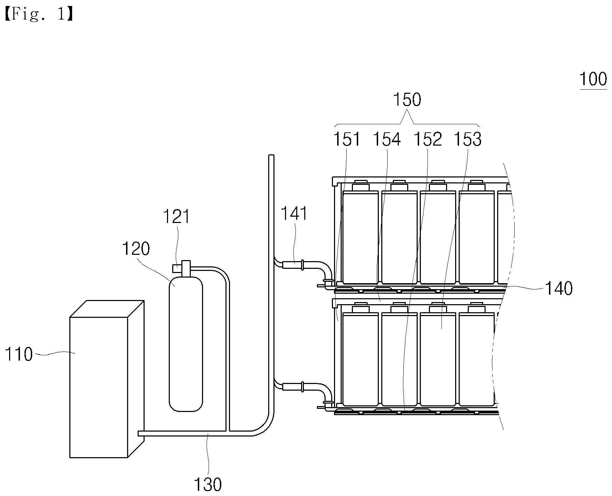

FIG. 1 is an energy storage module according to an embodiment.

Referring to FIG. 1, the energy storage module 100, according to an embodiment of the present disclosure, includes a coolant tank 110, a fire extinguishing agent tank 120, a pipe 130, a cooling plate 140, and at least one battery module 150.

The coolant tank 110 may store a coolant. The coolant may include water. The coolant tank 110 supplies and circulates coolant to the battery module 150 in normal times (e.g., during normal operation). Accordingly, the coolant tank 110 may cool the battery module 150. For example, the coolant tank 110 may be coupled to

(e.g., thermally coupled to or in contact with) the bottom of each battery module 150 by the pipe 130. The coolant tank 110 may continuously cool the battery modules 150 by circulating the coolant during normal times.

The extinguishing agent tank 120 may store an extinguishing agent. The extinguishing agent tank 120 may be connected to the pipe 130 through a valve 121.

The extinguishing agent may include a gaseous extinguishing agent, such as trifluoromethane (HFC-23, CHF₃), pentafluoroethane (HFC-125, C₂HF₅) or heptafluoropropane (HFC227ea, CF₃CHFCF₃), dodecafluoro-2-methylpentan-3-one (CF₃CF₂C(O)CF(CF₃)₂), or water. The extinguishing agent may be stored in an agent container in a compressing manner (e.g., may be stored in a compressed state or under pressure).

Also, the extinguishing agent may be mixed with nitrogen gas. In some embodiments, the extinguishing agent may include only nitrogen gas.

When an event occurs in the battery module 150, the valve 121 may be opened. Accordingly, the fire extinguishing agent moves through the pipe 130. In another embodiment, the coolant pre-filled in (or existing or present in) the pipe 130 may be sprayed into the vent of the battery cell experiencing the event. Accordingly, the battery cell in which the event has occurred may be extinguished by the fire extinguishing agent and/or the coolant. Also, heat may be prevented from spreading to surrounding battery cells. The fire extinguishing operation will be described in more detail below.

One end of the pipe 130 may be connected to the coolant tank 110 and the fire extinguishing agent tank 120. The pipe 130 may include a branch pipe 141. The pipe 130 may be connected to a plurality of cooling plates 140 by the branch pipe 141. The coolant, fire extinguishing agent, and/or nitrogen gas may be supplied to the cooling plate(s) 140 by the pipe 130.

For example, the pipe 130 may be filled with the coolant during normal times (e.g., during normal operation). The coolant may be transferred to (e.g., may flow to) the cooling plates 140 through the branch pipe 141. Accordingly, the battery cells of the battery module 150 may be cooled. In addition, when an event, such as a fire, occurs in some of the battery cells, the fire extinguishing agent and/or the nitrogen is supplied from the fire extinguishing agent tank 120 to the pipe 130. Accordingly, the pre-filled coolant and/or the fire extinguishing agent may be transferred to the battery cell experiencing the event.

The cooling plate 140 may be connected to the pipe 130 through the branch pipe 141. Also, the cooling plate 140 and the battery module 150 may be coupled to each other. The cooling plate 140 may include a plurality of cooling plates 140. Each battery module 150 may be coupled to a respective cooling plate 140. For example, referring to FIG. 1, the battery module 150 may be a two-layered battery module 150. The lower surface of each battery module 150 may be coupled to a respective cooling plate 140. Thus, the battery cells may be cooled by the coolant flowing through the corresponding cooling plate 140.

An event, such as fire, may occur in one or more of the battery cells. Accordingly, heat or flame may be transferred to the cooling plate 140 located on the upper portion of (e.g., arranged above) the battery cell in which the event occurs. Accordingly, the cooling plate 140 above the battery cell may be partially melted. Accordingly, the coolant and/or the fire extinguishing agent inside the cooling plate 140 may be supplied to (e.g., may be sprayed onto) the upper portion of the battery cell. Accordingly, the battery cell in which the event occurs may be directly cooled and any fire therein extinguished. The cooling plate 140 will be described in more detail below.

The battery module 150 may include a plurality of battery modules 150. The battery module 150 may be stacked in a vertical direction. Accordingly, a battery rack may be formed. The battery module 150 (e.g., each battery module 150) may include a side wall cover 151, a lower cover 152, and an upper cover 154. The battery cells may be disposed in a space formed between the covers 151, 152, and 154. For example, a space may be formed between the side wall cover 151 and the lower cover 152, and the upper cover 154 may cover the battery cells.

The side wall cover 151 and the lower cover 152 may surround three surfaces of the battery cell 153. Accordingly, one surface of the battery cell 153 where the vent is formed may be exposed. Also, the upper cover 154 may cover the remaining surface of the battery cell 153 (e.g., the surface of the battery cell 153 where the vent is formed).

The battery cells 153 may be connected to form a series circuit, a parallel circuit, or a series and parallel circuit. In the illustrated embodiment, the battery cell 153 is a cylindrical battery. However, embodiments are not limited thereto, and the battery cell 153 may have various shapes or types, such as a prismatic battery or a pouch battery. When an event occurs in the battery cell 153, the vent may be opened (e.g., may burst). Accordingly, high temperature gas, particles, and/or flames inside the battery cell 153 may be discharged to the outside. Accordingly, the gas, particles, and/or flames may be transmitted to (e.g., may be incident on) the cooling plate 140. Accordingly, the coolant and/or the fire extinguishing agent may be sprayed into the battery cell 153 where the event occurs. Accordingly, the battery cell 153 may be extinguished.

The energy storage module, according to an embodiment of the present disclosure, may include the cooling plate 140. The cooling plate 140 may cool the battery module 150 during normal times (e.g., during normal operation). When an event occurs in one of the battery cells 153, the coolant and/or the fire extinguishing agent in the cooling plate 140 may be sprayed into the battery cell 153 in which the event occurs. Accordingly, the energy storage module may both cool and extinguish while having a simple structure. Also, when the event occurs, the fire extinguishing operation may be performed immediately or substantially immediately.

Hereinafter, the cooling plate of the battery module and the upper cover of the lower battery module will be described in more detail. Hereinafter, the lower battery module may be referred to as a first battery module, the cooling plate contacting the first battery module may be referred to as a first cooling plate, the upper battery module may be referred to as a second battery module, and the cooling plate contacting the second battery module may be referred to as a second cooling plate.

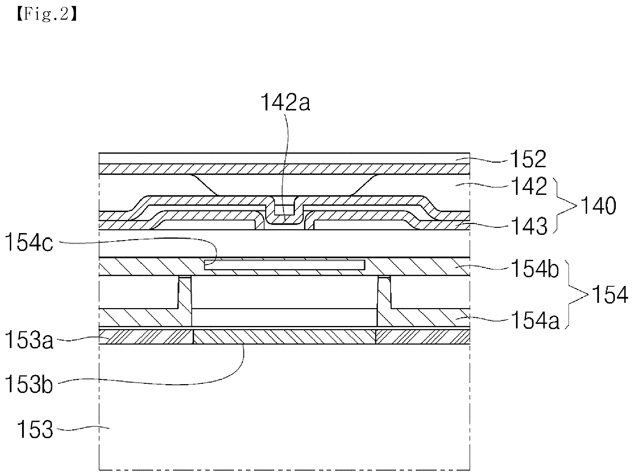

FIG. 2 is an enlarged view showing a positional relationship between a cooling plate of an upper battery module and an upper cover of a lower battery module.

The following explanation will be based on the battery module located on the bottom layer in FIG. 1.

Referring to FIGS. 1 and 2, the battery cell 153 may include a cap plate 153a and a vent 153b. The cap plate 153a may be disposed on the top surface of the battery cell 153. The vent 153b may be formed in a partial area of the cap plate 153a.

The vent 153b may be formed to be thinner than other regions of the cap plate 153a. In some embodiments, the vent 153b may be a groove formed in the cap plate 153a. When an event, such as a fire, occurs in the battery cell 153, high-temperature gas may be generated inside the battery cell 153. The internal pressure of the battery cell 153 may be increased by the gas generation. Accordingly, the vent 153b may open (e.g., may burst), which can prevent explosion of the battery cell 153.

The upper cover 154 may be coupled to (or may be above) the surface in which the vent 153b is formed. The upper cover 154 may include a guide frame 154a and a cover plate 154b. The guide frame 154a may contact the battery cell 153. The cover plate 154b may be disposed on the upper portion of the guide frame 154a.

The guide frame 154a may be coupled to the cap plate 153a. The guide frame 154a may have an opening corresponding to the vent 153b. Also, the guide frame 154a may have a shape protruding upwardly from (or along) a perimeter of the opening. Gas, particles, and/or flames generated by an event of the battery cell 153 may be guided by the protruding shape of the guide frame 154a.

The cover plate 154b may be coupled along an edge of the side wall cover 151. Also, the cover plate 154b may be coupled to the upper portion of the guide frame 154a. The cover plate 154b may surround the battery cells 153 together with the side wall cover 151 and the lower cover 152. Accordingly, the battery cell 153 may be protected from external impact. The cover plate 154b may have a hollow 154c. The hollow 154c may be formed in a region corresponding to the vent 153b and the opening in the guide frame 154a. A thickness of the region at where the hollow 154c is formed may be thinner than that of other regions of the cover plate 154b. When the gas, the particles, and/or the flames are generated by an event of the battery cell 153, the hollow 154c may be melted. Accordingly, the cover plate 154b may be opened. Accordingly, the gas, the particles, and/or the flames may be transferred to (e.g., may be incident on) the cooling plate 140.

The following description will be based on the battery module located in the top layer in FIG. 1.

A lower cover 152 may be disposed on the lower surface of the battery module 150. A lower surface of the lower cover 152 may be coupled to the cooling plate 140. The coolant may be filled inside the cooling plate 140. The battery cell 153 may be cooled by the cooling plate 140 in normal times (e.g., during normal operation).

The cooling plate 140 may include a coolant pipe 142 and a cover member 143. The coolant pipe 142 may receive (or accommodate) the coolant. The coolant may move through the coolant pipe 142. The cover member 143 may cover a lower surface of the coolant pipe 142. The coolant pipe 142 is not exposed to the outside by the cover member 143. Also, the coolant pipe 142 may be protected from the outside by the cover member 143. A hole may be formed in a partial area of the cover member 143. Accordingly, a lower surface of the melting area 142a of the coolant pipe 142 may be exposed to the outside (e.g., may be exposed through the opening in the cover member 143). The melting area 142a may correspond to the hollow 154c in the upper cover 154, the opening in the guide frame 154a, and the vent 153b of the battery cell 153. Accordingly, the high-temperature gas, particles, and/or flames are transmitted to (e.g., are incident on) the melting area 142a, and the melting area 142a may be melted and opened. Also, the coolant and/or the fire extinguishing agent inside the coolant pipe 142 may be sprayed toward the lower portion.

Hereinafter, a fire extinguishing operation performed when an event occurs in a battery cell of the energy storage module according to an embodiment of the present disclosure will be described in detail.

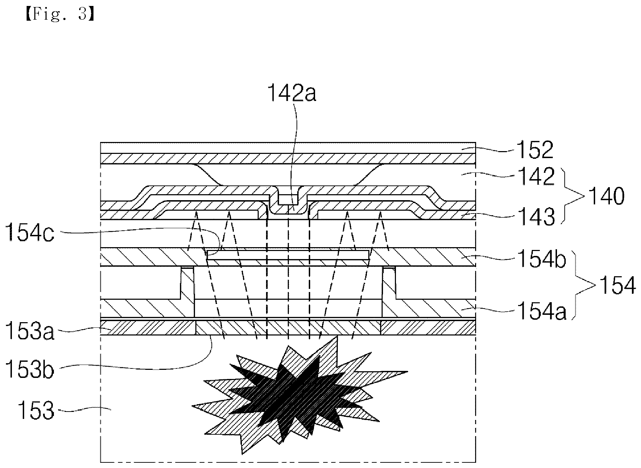

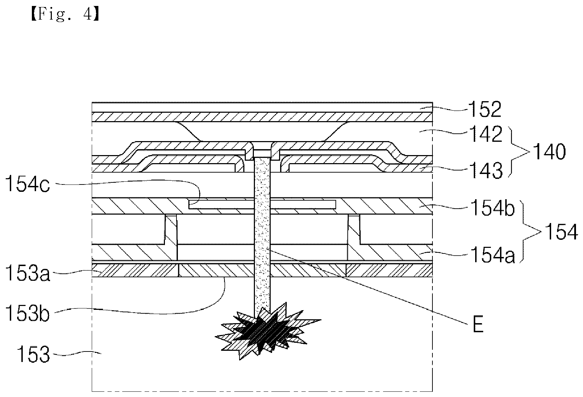

FIG. 3 is a view showing an event occurring in a battery cell of the lower battery module. FIG. 4 is a view showing a fire extinguishing agent being injected into the battery cell in which the event occurs.

Referring to FIG. 3, when an event occurs in the battery cell 153 of the lower battery module, the vent 153b may be opened. Also, the high temperature gas, particles, and/or flame generated in the battery cell 153 may move upwardly in the dotted line direction. Also, the gas, particle, and/or flame may pass through the guide frame 154a to melt the cover plate 154b. Subsequently, the gas, particle, and/or flame may be transferred to the lower surface of the melting area 142a of the coolant pipe 142 exposed through (or exposed by) the cover member 143. Accordingly, the gas, particle, and/or flame may melt the melting area 142a of the coolant pipe 142.

Referring to FIG. 4, the coolant and/or the fire extinguishing agent in the coolant pipe 142 may be sprayed toward the bottom through the melted melting area 142a. Accordingly, the coolant and/or the fire extinguishing agent E may be directly sprayed onto (or into) the battery cell 153 therebelow. Accordingly, a fire in the battery cell 153 may be extinguished.

For example, the coolant inside the coolant pipe 142 may be primarily sprayed. Also, when the fire extinguishing agent tank 120 is filled with the fire extinguishing agent, the fire extinguishing agent may move along the coolant pipe 142. The fire extinguishing agent may be sprayed downwardly through the melted melting area 142a.

For example, when the fire extinguishing agent tank 120 is filled with the fire extinguishing agent, the fire extinguishing agent may move along the coolant pipe 142. The fire extinguishing agent may be sprayed downwardly through the melted melting area 142a.

In another embodiment, when the fire extinguishing agent tank 120 is filled with a fire extinguishing agent and nitrogen, the fire extinguishing agent may be sprayed at a high pressure through the melted melting area 142a.

In another embodiment, when the fire extinguishing agent tank 120 is filled with only nitrogen, the coolant may be sprayed at high pressure through the melted melting area 142a.

Accordingly, the fire extinguishing agent and/or the coolant may be directly transferred to (e.g., may be directly sprayed onto) an upper portion of the battery cell 153 in which an event occurs. Accordingly, the battery cell may be immediately or substantially immediately extinguished.

The energy storage module, according to an embodiment of the present disclosure, may normally cool the battery module by using a cooling plate. In addition, when an event occurs in one of the battery cells, the coolant and/or the fire extinguishing agent may be sprayed. In detail, the coolant and/or the fire extinguishing agent filled in the cooling plate of an upper battery module may be sprayed into the battery cell of a lower battery module in which the event occurs. Accordingly, the energy storage module may cool and extinguish by using a simple structure. In addition, when an event occurs, the fire extinguishing operation may be performed immediately or substantially immediately.

An aspect of the disclosure relates to an energy storage module comprising: a coolant tank for storing coolant; a fire extinguishing agent tank for storing a fire extinguishing agent; a pipe connected to the coolant tank and fire extinguishing agent tank; a plurality of cooling plates connected to the pipe; and a plurality of battery modules coupled to the cooling plate, wherein the battery module comprises at least one battery cell, wherein the battery cell comprises one surface and the other surface, wherein a vent is formed on one surface of the battery cell, wherein the other surface of the battery cell is in contact with the cooling plate.

An aspect of the disclosure relates to an energy storage module comprising: a coolant tank for storing coolant; a fire extinguishing agent tank for storing a fire extinguishing agent; a pipe connected to the coolant tank and fire extinguishing agent tank; a plurality of cooling plates connected to the pipe; and a plurality of battery modules respectively coupled to the cooling plates, each of the battery modules comprising a battery cell, the battery cell having a vent in one surface thereof and another surface in contact with the corresponding one of the cooling plates.

In an aspect of the disclosure, the first cooling plate comprises a coolant pipe through which the coolant moves and a cover member surrounding the coolant pipe, wherein the coolant pipe has a melting area, and wherein the melting area is at a position corresponding to the battery cell of the second battery module.

In an aspect of the disclosure, when an event occurs in the battery cell of the second battery module, the coolant or the fire extinguishing agent is sprayed into the battery cell of the second battery module through the melting area of the first cooling plate.

In an aspect of the disclosure, the vent of the first battery module is in a region corresponding to the melting area of the first cooling plate.

In an aspect of the disclosure, the first battery module comprises a side wall cover, a lower cover, and an upper cover, wherein the battery cell of the first battery module is accommodated in a space formed by the side wall cover and the upper cover, wherein the upper cover is on the one surface of the battery cell at where the vent is formed, wherein the upper cover comprises a cover plate, wherein the cover plate has a hollow, and wherein the hollow is in a region corresponding to the vent and the melting area.

In an aspect of the disclosure, the upper cover comprises a guide frame, wherein the guide frame has an opening, and wherein the opening is in a region corresponding to the vent, the hollow, and the melting area.

## Claims

1. An energy storage module (100) comprising:
a coolant tank (110) for storing coolant;
a fire extinguishing agent tank (120) for storing a fire extinguishing agent;
a pipe (130) connected to the coolant tank (110) and fire extinguishing agent tank (120);
a plurality of cooling plates (140) connected to the pipe (130); and
a plurality of battery modules (150) respectively coupled to the cooling plates (140), each of the battery modules (150) comprising a battery cell (153), the battery cell (153) having a vent (153b) in one surface thereof and another surface in contact with the corresponding one of the cooling plates (140).

2. The energy storage module (100) as claimed in claim 1, wherein the fire extinguishing agent tank (120) is coupled to the pipe (130) through a valve (121).

3. The energy storage module (100) as claimed in any one of the preceding claims, wherein the fire extinguishing agent tank (120) is configured to store a fire extinguishing agent, nitrogen, or a mixture thereof.

4. The energy storage module (100) as claimed in any one of the preceding claims, wherein the battery modules (150) are stacked in a vertical direction, and
wherein one of the cooling plates (140) contacting an upper one of the battery modules (150) is at an upper part of a lower one of the battery modules (150).

5. The energy storage module (100) as claimed in any one of the preceding claims, wherein the battery modules (150) each comprises a side wall cover (151), a lower cover (152), and an upper cover (154),
wherein the battery cell (153) is accommodated in a space formed by the side wall cover (151) and the upper cover (154), and
wherein the upper cover (154) is on the one surface of the battery cell (153) at where the vent (153b) is formed.

6. The energy storage module (100) as claimed in claim 5, wherein the lower cover (152) contacts the corresponding cooling plate (140).

7. The energy storage module (100) as claimed in claim 5, wherein the upper cover (154) comprises a cover plate (154b),
wherein the cover plate (154b) has a hollow (154c), and
wherein the hollow (154c) is in a region corresponding to the vent (153b) of a corresponding one of the battery cells (153).

8. The energy storage module (100) as claimed in claim 7, wherein the upper cover (154) comprises a guide frame (154a),
wherein the guide frame (154a) is between the battery cell (153) and the cover plate (154b), and
wherein the guide frame (154a) contacts the battery cell (153).

9. The energy storage module (100) as claimed in claim 8, wherein the guide frame (154a) has an opening,
wherein the opening is in a region corresponding to the vent (153b), and
wherein the guide frame (154a) protrudes upwardly from an edge of the opening to contact the cover plate (154b).

10. The energy storage module (100) as claimed in any one of the preceding claims, wherein each of the cooling plates (140) comprise a coolant pipe (142) through which the coolant moves and a cover member (143) surrounding the coolant pipe (142),
wherein the coolant pipe (142) has a melting area (142a), and
wherein the melting area (142a) is at a position corresponding to the battery cell (153) of a lower one of the battery modules (150).

11. The energy storage module (100) as claimed in claim 10, wherein the melting area (142a) is at a position corresponding to the vent (153b) of the battery cell (153) of the lower one of the battery modules (150).

12. The energy storage module (100) as claimed in claim 10, wherein the cover member (143) has a hole exposing the melting area (142a), and
wherein the melting area (142a) protrudes downwardly into the hole.

13. The energy storage module (100) as claimed in claim 10, wherein, when the melting area (142a) is opened, the coolant from the coolant pipe (142) or the fire extinguishing agent from the fire extinguishing agent tank (120) is sprayed into a lower battery cell (153).

14. The energy storage module (100) as claimed in any one of the preceding claims, wherein the battery modules (150) comprise a first battery module (150) and a second battery module (150) on the first battery module (150),
wherein the cooling plates (140) comprise a first cooling plate (140) and a second cooling plate (140),
wherein the first cooling plate (140) is in contact with the battery cell (153) of the first battery module (150), and
wherein the second cooling plate (140) is in contact with the battery cell (153) of the second battery module (150).

15. The energy storage module (100) as claimed in claim 14, wherein the first battery module (150) is cooled by the first cooling plate (140), and
wherein the second battery module (150) is cooled by the second cooling plate (140).
